# EUROPÄISCHE PATENTANMELDUNG

(11) **EP 3 366 964 A1**
(43) Veröffentlichungstag der Anmeldung: **29.08.2018**
(21) Anmeldenummer: 17157376.9
(22) Anmeldetag: 22.02.2017
(51) Int. Cl.: F16L 5/04, A62C 2/06, H02G 3/22

(54) **BRANDSCHUTZELEMENT**

(71) Anmelder: HILTI Aktiengesellschaft, 9494 Schaan (LI)
(72) Erfinder: Langford, Paul, 8834 Schindellegi (CH); Mordau, Ulf, 86875 Waal (DE); Münzenberger, Herbert, 65191 Wiesbaden (DE)
(74) Vertreter: Hilti Aktiengesellschaft Corporate Intellectual Property

(57) **Zusammenfassung**

Ein Brandschutzelement (100) zum Abschotten von durch Wände oder Decken hindurchführende Öffnungen, insbesondere von Leitungsdurchgängen, umfasst ein Formteil (112) aus intumeszierendem Material mit mehreren Durchgangsöffnungen (116) zum Durchführen von Leitungen (121), die sich insbesondere parallel zueinander von einer ersten Seite (122) zu einer entgegengesetzten zweiten Seite (123) des Brandschutzelements (100) erstrecken und jeweils durch eine Membran (119) rauchgasdicht verschlossen sind.

## Beschreibung

Die Erfindung betrifft ein Brandschutzelement zum Abschotten von durch Wände oder Decken hindurchführenden Öffnungen, insbesondere von Leitungsdurchgängen, mit einem Formteil aus intumeszierendem Material.

Brandschutzelemente, die Leitungsdurchgänge mit nicht feuerfesten Rohren oder Kabeln in Decken oder Wänden im Brandfall schließen können, um eine Ausbreitung von Feuer und Rauch in Gebäuden zu verhindern, sind in verschiedensten Ausgestaltungen bekannt. Die Brandschutzelemente enthalten üblicherweise ein intumeszierendes Material mit Blähgraphit, das um die Leitungen herum angeordnet wird, und eine Verstärkungseinlage, die das intumeszierende Material stabilisiert.

Bei den bekannten Brandschutzelementen werden die Blähgraphitpartikel durch die Hitze an der Oberfläche aktiviert, expandieren zum Feuer hin und bilden zunächst eine isolierende Kruste. Diese wird jedoch nach einiger Zeit instabil und fällt herunter. Somit steht die Kruste nicht mehr als Isolationsschicht zur Verfügung, und die darunterliegende intumeszierende Schicht wird aktiviert. Auf diese Weise brennt das Brandschutzelement Schritt für Schritt ab und gewährleistet nur für eine begrenzte Dauer Schutz.

Aufgabe der Erfindung ist es, ein Brandschutzelement zu schaffen, bei dem sich im Brandfall eine stabilere Kruste ausbildet und das es erleichtert, Leitungen geordnet zu verlegen.

Zur Lösung der Aufgabe ist ein Brandschutzelement zum Abschotten von durch Wände oder Decken hindurchführende Öffnungen, insbesondere von Leitungsdurchgängen, mit einem Formteil aus intumeszierendem Material vorgesehen. Das Formteil hat mehrere Durchgangsöffnungen zum Durchführen von Leitungen, die sich insbesondere parallel zueinander von einer ersten Seite zu einer entgegengesetzten zweiten Seite des Brandschutzelements erstrecken und jeweils durch eine Membran rauchgasdicht verschlossen sind. Die mehreren Durchgangsöffnungen im Brandschutzelement ermöglichen auf einfache Weise, unterschiedliche Arten von Leitungen separiert voneinander durch das Brandschutzelement zu führen, beispielsweise indem Strom- und Datenkabel jeweils eigene Durchgangsöffnungen belegen. Auf diese Weise kann das Brandschutzelement als Kabelmanagementsystem genutzt werden. Die Membran stellt dabei sicher, dass nicht belegte Durchgangsöffnungen rauchgasdicht sind. Um eine Leitung durch eine Durchgangsöffnung zu führen, wird die Membran in der entsprechenden Durchgangsöffnung durchstoßen. Es kann eine einzelne Membran vorgesehen sein, die alle Durchgangsöffnungen verschließt, beispielsweise indem sich die Membran im Wesentlichen durch das gesamte Formteil erstreckt. Alternativ können auch mehrere Membranen vorgesehen sein, die jeweils nur einen Teil der Durchgangsöffnungen oder auch nur einzelne Durchgangsöffnungen verschließen.

Das Formteil hat vorzugsweise eine Wabenstruktur. Im Sinne der Erfindung ist eine Wabenstruktur ein dreidimensionales Gitter, das in einer Schnittebene aus ein oder mehreren Grundformen in Form von Polygonen aufgebaut ist und sich entlang einer Achse erstreckt, die insbesondere senkrecht zur Schnittebene steht. Vorzugsweise weist die Wabenstruktur eine gleichförmige, sechseckige Grundform auf und bildet auf diese Weise eine Art Honig- oder Bienenwabe. Der Vorteil des erfindungsgemäßen Brandschutzelements ist, dass aufgrund der gitterförmigen Wabenstruktur das intumeszierende Material in die Waben expandieren und sich dort mit intumeszierendem Material benachbarter Wabenstrukturen verbinden kann. Hierdurch bildet sich im Brandfall eine vernetze, stabile Kruste, die für eine längere Zeit einen zuverlässigen Brandschutz gewährleistet.

In einer bevorzugten Ausführungsform ist die Membran in der Mitte zwischen der ersten und der zweiten Seite angeordnet und verläuft vorzugsweise parallel zu einer dieser Seiten. Hierdurch trennt die Membran die Durchgangsöffnung in zwei Abschnitte, die senkrecht zur ersten oder zweiten Seite die gleiche Tiefe aufweisen. Indem die Membran auf diese Weise angeordnet ist, kann das Brandschutzelement bezüglich der Membran symmetrisch aufgebaut sein, wodurch das Brandschutzelement die gleichen Eigenschaften auf beiden Seiten der Membran aufweist.

Zumindest ein Teil der Durchgangsöffnungen kann mit einem Füllschaum gefüllt sein. Der Füllschaum gewährleistet einen rauchdichten Abschluss der Durchgangsöffnung, die von einer Leitung durchstoßen wurden, indem die Durchgangsöffnung, insbesondere vollständig, mit dem Füllschaum gefüllt ist. Ferner dient der Füllschaum zur Lagerung der Leitungen sowie der Schalldämmung.

Gemäß einer vorteilhaften Ausführungsform hat das Brandschutzelement einen Rahmen, der das Formteil in einer Umfangsrichtung zumindest abschnittsweise umgibt, insbesondere wobei die Umfangsrichtung sich um eine Achse erstreckt, die parallel zur axialen Ausdehnung der Durchgangsöffnungen angeordnet ist. Hierbei sind vorzugsweise die erste und die zweite Seite des Formteils nicht von dem Rahmen bedeckt. Indem das Formteil in einen Rahmen integriert ist, wird das Formteil geschützt und stabilisiert. Auf diese Weise verbleibt die Intumeszenz-Kruste im Brandfall länger, das Formteil verbrennt langsamer, und die Brandschutzeigenschaften des Brandschutzelements sind verbessert.

Der Rahmen ist vorzugsweise einstückig. Dies bietet den Vorteil, dass es nur wenige Übergangsbereiche zwischen verschiedenen Abschnitten des Rahmens gibt, in denen intumeszierendes Material und/oder Füllmaterial im Brandfall austreten kann. Auf diese Weise begrenzt der Rahmen die Ausbreitung des intumeszierenden Materials im Brandfall und ermöglicht so, die Expansion des intumeszierenden Materials in eine gewünschte Richtung zu lenken. Da sich somit das intumeszierende Material nicht mehr unkontrolliert in alle Richtungen ausbreitet, kann die Menge an intumeszierendem Material in dem Brandschutzelement reduziert werden, wodurch sich geringere Herstellungskosten ergeben. Ferner stabilisieren sich verschiedene Abschnitte des Rahmens bei der Expansion des intumeszierenden Materials gegenseitig, sodass durch diese Gestaltung die strukturelle Integrität des Brandschutzelements verbessert ist.

Es ist von Vorteil, wenn der Rahmen ein Material aus der folgenden Gruppe umfasst: Pappe, Metall, Glasfasern, Basaltfasern, Kohlenstofffasern, oder Keramikfasern. Auch ein hybrider Aufbau des Rahmens aus mehreren Materialien ist möglich. Diese Materialien weisen im Vergleich zum intumeszierendem Material des Formteils eine höhere Temperaturbeständigkeit auf. Diese ist vorteilhaft, da der Rahmen von der das intumeszierende Material aktivierenden Temperatur nicht beeinträchtigt wird und auf diese Weise seine stabilisierende Funktion auch im Brandfall ausüben kann.

Vorzugsweise umfasst der Rahmen ein Metallblech, ein Streckmetall, eine mineralische Bauplatte, ein Glasfasergitter oder -gewebe. Die Verwendung eines Gewebes bietet eine gute Verbindung des Rahmens mit dem Formteil. Ferner behält ein Rahmen aus einem Gewebe seine stabilisierenden Eigenschaften auch bei vereinzelten strukturellen Schäden bei.

Der Rahmen kann ein intumeszierendes Material umfassen, wobei das intumeszierende Material identisch zum intumeszierenden Material der Wabenstruktur sein kann. Hierdurch dehnt sich der Rahmen im Brandfall zusätzlich zum intumeszierenden Material der Wabenstruktur aus und stellt einen dichten Verschluss der Öffnung sowie eine sichere Lagerung des Brandschutzelements in der Öffnung sicher.

In einer weiteren bevorzugten Ausführungsform hat das Brandschutzelement eine Deckplatte, um das Formteil zu schützen. Die Deckplatte ist insbesondere dazu vorgesehen die erste oder die zweite Seite des Brandschutzelements abzudecken, die außen liegen, d.h. potentiell dem Brand zugewandt sind. Es ist von Vorteil, wenn die Deckplatte eine Seite des Formteils im Wesentlichen vollständig abdeckt. Es können auch mehrere Deckplatten vorgesehen sein, insbesondere jeweils eine auf der ersten und eine auf der zweiten Seite.

Die Deckplatte umfasst bevorzugt ein Material aus der folgenden Gruppe umfasst: Pappe, Metall, Glasfasern, Basaltfasern, Kohlenstofffasern oder Keramikfasern. Auch ein hybrider Aufbau der Deckplatte aus mehreren Materialien ist möglich. Diese Materialien weisen im Vergleich zum intumeszierenden Material des Formteils eine hohe Temperaturbeständigkeit auf und verbessern die Brandschutzeigenschaften des Brandschutzelements.

Vorzugsweise umfasst die Deckplatte ein Metallblech, ein Streckmetall, eine mineralische Bauplatte, ein Glasfasergitter oder -gewebe. Die Verwendung eines Gewebes hat den Vorteil, dass Leitungen leichter durch die Deckplatte geführt werden können. Ferner behält eine Deckplatte aus einem Gewebe seine strukturelle Integrität auch bei vereinzelten Schäden bei.

Die Deckplatte kann ein intumeszierendes Material aufweisen. Hierdurch stellt die Deckplatte eine zusätzliche intumeszierende Schicht dar, die die Brandschutzeigenschaften des Brandschutzelements verbessert.

Es ist von Vorteil, wenn das Formteil Blähgraphit aufweist. Indem das intumeszierende Material, das die Wände der Durchgangsöffnungen bildet, als wesentlichen Bestandteil Blähgraphit enthält, bilden sich im Brandfall Äste aus Blähgraphitpartikeln in den Durchgangsöffnungen, die sich mit anderen Ästen aus Blähgraphitpartikeln von gegenüberliegenden Wänden verhaken und Cluster bilden. Auf diese Weise entsteht im Brandfall eine vernetzte Struktur aus Blähgraphitpartikeln, die eine besonders hohe Stabilität der Intumeszenz-Kruste sicherstellt und damit die Brandschutzeigenschaften des Brandschutzelements entscheidend verbessert.

Das Formteil ist vorzugsweise quaderförmig oder zylinderförmig, insbesondere kreiszylinderförmig. Alternativ kann das Formteil ein Prisma sein. Das Brandschutzelement weist dabei im Wesentlichen dieselbe Form auf. Diese Gestaltung hat den Vorteil, dass sich das Brandschutzelement besonders zum Abschotten von rechteckigen oder runden Öffnungen eignet, die in der Praxis am häufigsten vorkommen. Ferner sind Formteile in diesen Formen kostengünstig herstellbar und können raumeffizient gelagert werden.

Weitere Vorteile und Merkmale ergeben sich aus der nachfolgenden Beschreibung in Verbindung mit den beigefügten Zeichnungen. In diesen zeigen:
- Figur 1a in einer perspektivischen Darstellung eine erste Ausführungsform eines erfindungsgemäßen Brandschutzelements,
- Figur 1b in einer Schnittansicht das Brandschutzelement aus Figur 1a mit einer durchgeführten Leitung,
- Figur 2 in einer perspektivischen Darstellung eine zweite Ausführungsform eines erfindungsgemäßen Brandschutzelements,
- Figur 3 in einer perspektivischen Darstellung das Brandschutzelement aus Figur 2 mit einer Deckplatte,
- Figur 4 in einer perspektivischen Darstellung eine dritte Ausführungsform eines erfindungsgemäßen Brandschutzelements, das in einer Öffnung eingebaut ist, und
- Figur 5 in einer schematischen Darstellung ein Cluster aus Blähgraphitpartikeln in einer Wabe des Brandschutzelements aus Figur 4.

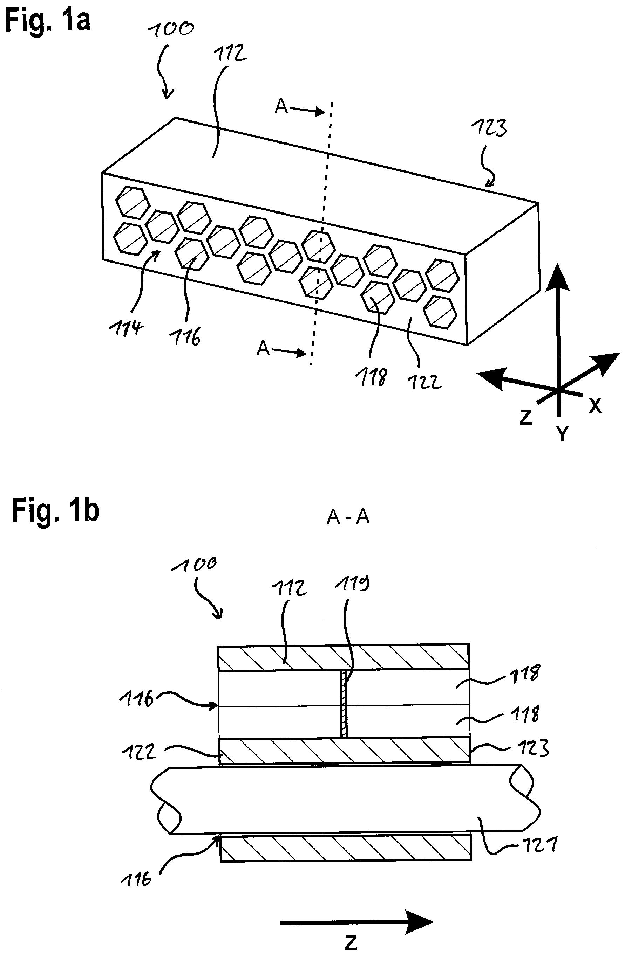

In Figur 1a ist ein erfindungsgemäßes Brandschutzelement 100 mit einem Formteil 112 aus intumeszierendem Material gezeigt, das zum brandsicheren Verschluss von Bauteilöffnungen mit Leitungsdurchführungen wie Kabel und/oder Rohre vorgesehen ist.

Das Formteil 112 ist ein näherungsweise quaderförmiger Block, dessen Kanten sich entlang der Achsen X, Y, und Z eines orthogonalen Koordinatensystems erstrecken.

In einer alternativen Ausführungsform kann das Formteil 112 eine beliebige Geometrie aufweisen, die geeignet ist, eine durch Wände oder Decken hindurchführende Öffnung sicher zu verschließen. Insbesondere kann das Formteil 112 in der Form eines Kreiszylinders oder eines Prismas ausgebildet sein.

Das Formteil 112 hat eine Wabenstruktur 114, die durch Durchgangsöffnungen 116 in Form von Waben mit einer gleichseitigen sechseckigen Grundform in der X-Y-Ebene gebildet ist und deren Wabenwände 118 sich in Z-Richtung axial erstrecken. Das bedeutet, dass die Durchgangsöffnungen 116 parallel zueinander angeordnet sind.

Die Durchgangsöffnungen 116 sind röhrenförmig vorgesehen und weisen jeweils eine Membran 119 auf (siehe Figur 1 b), die die Durchgangsöffnung 116 in der X-Y-Ebene vollständig verschließt. Durch die Membranen 119 werden die Durchgangsöffnungen 116 rauchgasdicht verschlossen, sodass das Brandschutzelement 100 standardmäßig dicht gegenüber Rauch sowie Gasen ist.

Die Durchgangsöffnungen 116 sind identisch zueinander gestaltet. Alternativ können auch Durchgangsöffnungen 116 vorgesehen sein, die unterschiedliche Öffnungsquerschnitte sowohl in Form als auch Größe aufweisen.

In einer bevorzugten Ausführungsform können insbesondere Durchgangsöffnungen 116 mit einer kreisrunden Querschnittsfläche und einem Durchmesser vorgesehen sein, der auf den Durchmesser entsprechender Leitungen 121 abgestimmt ist. Auf diese Weise können Leitungen 121 durch Durchgangsöffnungen 116 mit einem entsprechenden Durchmesser geführt werden, sodass die Wabenwand 118 bzw. in diesem Fall die Innenwand der Durchgangsöffnung 116, vorzugsweise mittels einer Presspassung, dicht an der Leitung 121 anliegt. Somit ist die Rauchgasdichtigkeit des Formteils 112 auch nach dem Durchstoßen der Membran 119 gewährleistet, ohne dass hierzu weitere Maßnahmen erforderlich wären, wie das Ausspritzen der Durchgangsöffnung 116 mit einem Dichtschaum.

Die Anordnung der Durchgangsöffnungen 116 ist im Wesentlichen beliebig. Es ist jedoch vorteilhaft, wenn die Durchgangsöffnungen 116 in einem symmetrischen Muster angeordnet sind, um ähnliche Brandschutzeigenschaften über das gesamte Brandschutzelement 100 sicherstellen zu können.

Die Durchgangsöffnungen 116 erstrecken sich von einer ersten Stirnseite 122 bis zu einer entgegengesetzten zweiten Stirnseite 123 des Formteils 112. Somit erstrecken sich die Durchgangsöffnungen 116 in Z-Richtung durch das gesamte Formteil 112.

Die Membran 119 ist in der axialen Mitte der Durchgangsöffnung 116 angeordnet, d.h. in gleichem Abstand und parallel zu den beiden Stirnseiten 122, 123.

In der gezeigten Ausführungsform ist für jede Durchgangsöffnung 116 eine separate Membran 119 vorgesehen. Alternativ kann das Formteil 112 eine Membran 119 aufweisen, die sich zumindest abschnittsweise durch das Formteil 112 erstreckt und mehrere oder alle Durchgangsöffnungen 116 verschließt.

In einer alternativen Ausführungsform kann ein Teil der Durchgangsöffnungen 116 ohne Membran vorgesehen sein. In diesem Fall wäre das Brandschutzelement 100 in axialer Richtung Z zumindest abschnittsweise luftdurchlässig. Hierdurch kann das Brandschutzelement 100 beispielsweise die nötige Ventilation in einem Spalt einer Wand mit einer vorgehängten Fassade sicherstellen, den Spalt aber im Brandfall durch die Reaktion des intumeszierenden Materials verschließen

Die Durchgangsöffnungen 116 sind als Durchführungen in axialer Richtung Z durch das Formteil 112 für Leitungen vorgesehen. Zum Durchführen einer Leitung 121 wird die Membran 119 der entsprechenden Durchgangsöffnung 116 durchstoßen. Das Durchstoßen der Membran 119 kann mittels eines Werkzeugs, beispielsweise einer Lanze, oder werkzeuglos erfolgen, indem ein Ende der Leitung 121 als Lanze verwendet wird.

Je nach Durchmesser der Leitung 121 und Querschnitt der Durchgangsöffnung 116 kann eine Durchgangsöffnung 116 für eine oder mehrere Leitungen 121 vorgesehen sein.

Das intumeszierende Material, aus dem das Formteil 112 gebildet ist, umfasst einen Anteil Blähgraphit und kann je nach Anforderung ein spezielles Intumeszenzverhalten (unter anderem Schaumhöhe und Druck) aufweisen, mittels dem das Brandschutzelement 100 an unterschiedliche Einsatzbedingungen angepasst werden kann.

Das intumeszierende Material weist insbesondere ein Intumeszenzvolumen auf, das einen sicheren Verschluss der Durchgangsöffnungen 116 im Brandfall gewährleistet.

Die Membran 119 kann aus dem gleichen intumeszierenden Material wie das Formteil 112 gebildet sein.

Alternativ kann die Membran 119 aus einem beliebigen rauchgasdichten Material bestehen, das vorzugsweise eine höhere Temperaturbeständigkeit als das intumeszierende Material des Formteils 112 aufweist und bevorzugt ohne Werkzeug mit dem Ende einer Leitung 121 durchstoßen werden kann.

Es ist von Vorteil, wenn die Membran 119 elastisch ist, sodass sie sich dicht um ein oder mehrere durch sie hindurchführende Leitungen 121 anlegen und damit die Durchgangsöffnung 116 abdichten kann.

Durch die mehreren zueinander beabstandeten Durchgangsöffnungen 116 stellt das Brandschutzelement 100 ein Ordnungssystem bereit, das es erleichtert, verschiedene Leitungen zu sortieren und zu gruppieren. Auf diese Weise kann das Brandschutzelement 100 als Leitungsmanagementsystem bzw. Leitungsordnungssystem genutzt werden.

Ferner kann zumindest ein Teil der Durchgangsöffnungen 116 für eine bestimmte Art von Leitungen speziell ausgestaltet sein. Beispielsweise könnte eine Durchgangsöffnung 116 für Kommunikationskabel eine Hülse zur Abschirmung elektromagnetischer Störfelder aufweisen.

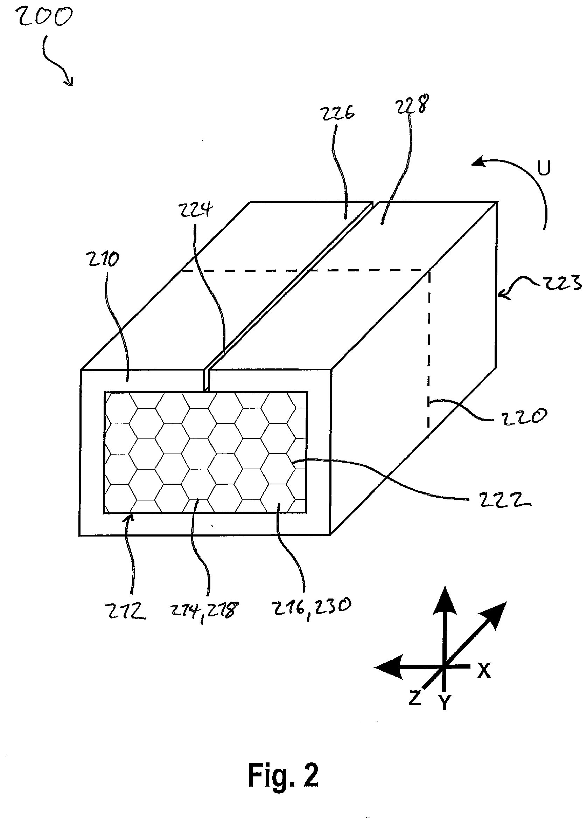

In Figur 2 ist eine weitere Ausführungsform eines erfindungsgemäßen Brandschutzelements 200 gezeigt, das einen Rahmen 210 sowie ein Formteil 212 aus intumeszierendem Material mit Durchgangsöffnungen 216 in Form von Waben umfasst, die eine Wabenstruktur 214 bilden. Die Wabenstruktur 214 erstreckt sich im Vergleich zur ersten Ausführungsform des Brandschutzelements 100 über das gesamte Formteil 212, das jedoch ansonsten identisch zum Formteil 112 des Brandschutzelements 100 aufgebaut ist. Insbesondere weist das Formteil 212 zumindest eine Membran auf, die die Durchgangsöffnungen 216 verschließen. Für gleiche Strukturen mit gleichen Funktionen sind im Folgenden daher entsprechende Bezugszeichen vergeben.

Das Brandschutzelement 200 ist quaderförmig und wird von dem Rahmen 210 an seinem Umfang 220 in Umfangsrichtung U umschlossen, wobei die Stirnseiten 222, 223 des Formteils 212 frei bleiben. Die Umfangsrichtung U erstreckt sich um die Z-Achse, die parallel zur axialen Ausrichtung der Durchgangsöffnungen 216 angeordnet ist. Somit zeigen die Stirnseiten 222, 223 die Grundform der Wabenstruktur 214 in der X-Y-Ebene und die Durchgangsöffnungen 216 erstrecken sich in Z-Richtung durch das gesamte Formteil 212.

Die Erfindung ist nicht auf Brandschutzelemente 200 mit quaderförmigen Formteilen 212 und Rahmen 210 begrenzt, sondern umfasst auch Brandschutzelemente 200, die eine beliebige Form und einem beliebigen Querschnitt aufweisen.

Der Rahmen 210 bedeckt den Umfang 220 bis auf einen schmalen Schlitz 224 vollständig. Der Schlitz 224 ist dabei von zwei entgegengesetzt angeordneten Enden 226, 228 des Rahmens 210 gebildet, die sich auf einer Seite des Brandschutzelements 200 gegenüberliegen.

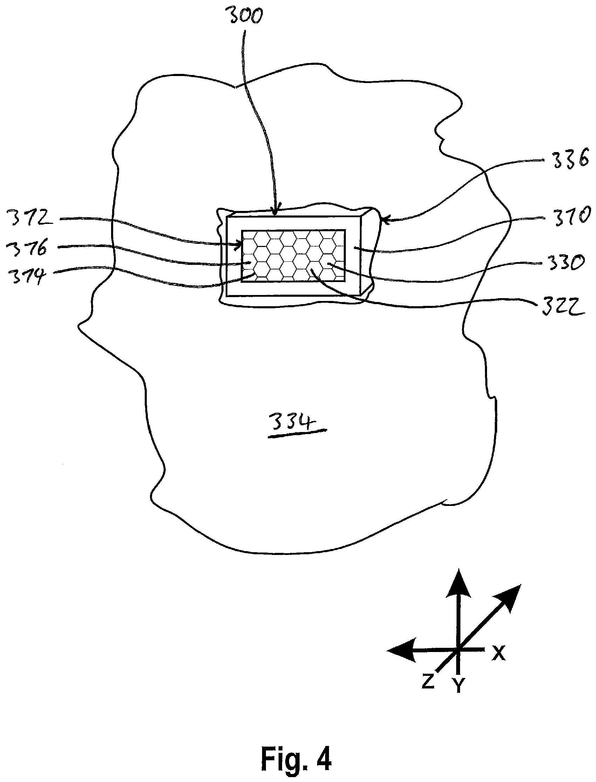

In einer alternativen Ausführungsform kann der Rahmen 210 in Umfangsrichtung U geschlossen sein und keinen Schlitz 224 aufweisen (siehe Figur 4).

Der Rahmen 210 ist vorzugsweise einstückig. Alternativ kann der Rahmen 210 aus mehreren miteinander verbundenen Abschnitten gebildet sein.

Die Durchgangsöffnungen 216 sind mit einem flexiblen Füllschaum 230 gefüllt. Alternativ können die Durchgangsöffnungen 216 mit einem druckstabilen Füllschaum 230 gefüllt sein.

Der Füllschaum 230 weist im Wesentlichen keine Brandschutzadditive auf. Alternativ kann der Füllschaum 230 Brandschutzadditive umfassen, um die Brandschutzeigenschaften des Brandschutzelements 200 zu verbessern.

Die Durchgangsöffnungen 216 sind vorzugweise gleichmäßig mit dem Füllschaum 230 gefüllt, um homogene Eigenschaften über das gesamte Formteil 212 zu gewährleisten.

In einer alternativen Ausführungsform können zumindest ein Teil der Durchgangsöffnungen 216 abschnittsweise mit einem Füllschaum 230 gefüllt sein. Beispielsweise können die Durchgangsöffnungen 216 lediglich an den Stirnseiten 222, 223 mit Füllschaum 230 gefüllt sein, während die Durchgangsöffnungen 216 im Inneren leer sind. Auf diese Weise kann Füllschaum 230 eingespart und das Gewicht des Brandschutzelements 200 reduziert werden.

Ferner können verschiedene Durchgangsöffnungen 216 mit unterschiedlichen Füllschäumen 230 gefüllt sein, oder das Formteil 212 kann leere Durchgangsöffnungen 216, d.h. ohne Füllschaum 230, aufweisen, um die Eigenschaften der verschiedenen Füllschäume 230 bzw. von leeren Durchgangsöffnungen 216 zu kombinieren. Es ist ferner von Vorteil, wenn unterschiedliche Füllschäume 230, beispielsweise durch eine farbige Markierung an den Stirnseiten 222, 223, identifizierbar sind. Dies ermöglicht unter anderem eine vereinfachte Montage, indem Leitungen gezielt durch Durchgangsöffnungen 216 mit einem Füllschaum 230 geführt werden können, der aufgrund seiner Eigenschaften weniger Widerstand beim Durchführen der Leitungen bietet oder der eng an den Leitungen anliegt und auf diese Weise eine besonders hohe Dichtigkeit gewährleistet.

Der Füllschaum 230 ist fest, vorzugsweise stoffschlüssig, mit der Wabenstruktur 214 verbunden. Hierdurch ist sichergestellt, dass der Füllschaum 230 nicht aus den Durchgangsöffnungen 216 herausgedrückt wird, wenn eine Leitung durch den Füllschaum 230 geführt oder eine Durchführung für eine Leitung im Füllschaum 230 gebildet wird.

Das Formteil 212 ist fest, vorzugsweise stoffschlüssig, mit dem Rahmen 210 verbunden.

Der Rahmen 210 besteht aus Steckmetall. In einer alternativen Ausführungsform kann der Rahmen 210 aus einer Platte, einer Matte, einem Gitter oder einem Gewebe gebildet sein, welche(s) vorzugsweise aus Pappe, Metall, Glasfasern, Basaltfasern, Kohlenstofffasern oder Keramikfasern besteht.

In einer alternativen Ausführungsform kann der Rahmen 210 ein intumeszierendes Material, insbesondere das gleiche intumeszierende Material wie die Wabenstruktur 214, umfassen.

Der Rahmen 210 kann ausschließlich aus intumeszierendem Material gebildet sein. Alternativ kann der Rahmen 210 das intumeszierende Material zusätzlich aufweisen, wobei das nicht intumeszierende Material des Rahmens 210 eine Verstärkungseinlage bilden kann, die auf einer Schicht aus intumeszierendem Material angebracht oder zumindest teilweise in einer Schicht aus intumeszierendem Material angeordnet ist. In beiden Fällen ist die Schicht aus intumeszierendem Material fest mit der Verstärkungseinlage verbunden.

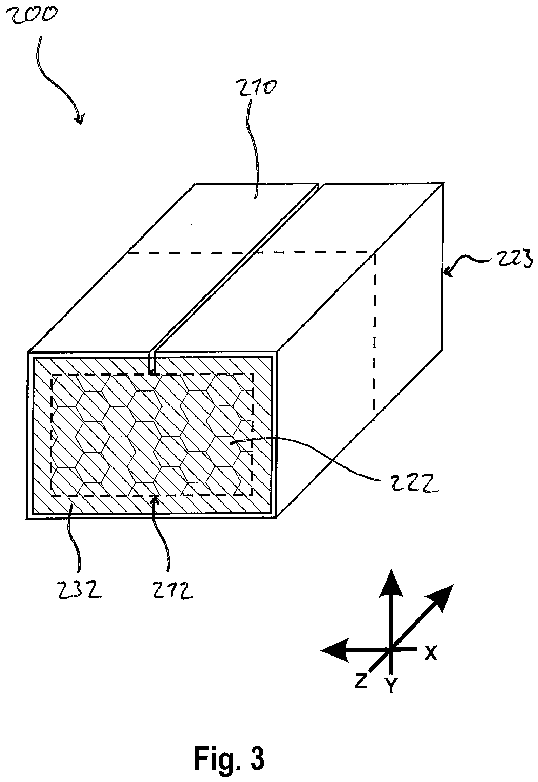

Das Brandschutzelement 200 kann eine Deckplatte 232 (siehe Figur 3 aufweisen, die eine Seite des Brandschutzelements 200 zumindest abschnittsweise bedeckt.

In Figur 3 bedeckt die Deckplatte 232 die Stirnseite 222 des Formteils 212 und bildet auf diese Weise eine zusätzliche Schutzschicht.

Die Deckplatte 232 besteht aus Steckmetall. In einer alternativen Ausführungsform kann die Deckplatte 232 aus einer Platte, einer Matte, einem Gitter oder einem Gewebe gebildet sein, welche(s) vorzugsweise aus Pappe, Metall, Glasfasern, Basaltfasern, Kohlenstofffasern oder Keramikfasern besteht.

In einer alternativen Ausführungsform kann die Deckplatte 232 ein intumeszierendes Material, insbesondere das gleiche intumeszierende Material wie die Wabenstruktur 214, umfassen.

Die Deckplatte 232 ist fest, vorzugsweise stoffschlüssig, mit dem Formteil 212 und/oder dem Rahmen 210 verbunden.

Gemäß einer bevorzugten Ausführungsform weist die Deckplatte 232 Markierungen auf, die der Anordnung der Durchgangsöffnungen 216 entsprechen, sodass Leitungen gezielt durch die einzelnen unter der Deckplatte 232 angeordneten Durchgangsöffnungen 216 durchgeführt werden können.

Das Brandschutzelement 200 kann mehrere Deckplatten 232 aufweisen, die an verschiedenen Seiten des Brandschutzelements 200 angeordnet sind.

Mehrere Deckplatten 232 können nebeneinander und/oder übereinander auf einer Seite des Brandschutzelements 200 angeordnet sein.

Die Herstellung des Formteils 112, 212 des erfindungsgemäßen Brandschutzelements 100, 200 erfolgt mittels eines intumeszierenden Schaumes, der in eine Form mit einer entsprechenden Geometrie eingebracht wird.

Ist für das Brandschutzelement 100, 200 ein Rahmen 210 aus intumeszierendem Material vorgesehen, so kann dieser direkt in diesem Schritt mittels einer entsprechenden Form ausgebildet werden.

Besteht die Membran 119 aus demselben intumeszierenden Material, wie das Formteil 112, 212, so kann die Membran 119 in der Form entsprechend vorgesehen sein, sodass die Durchgangsöffnungen 116, 216 mit der Membran 119 in einem Schritt hergestellt werden können.

Alternativ kann die Membran 119, insbesondere wenn diese aus einem anderen Material als das Formteil 112, 212 besteht, in die Form eingesetzt werden, sodass das Formteil 112, 212 bei der Herstellung entsprechend um die Membran 119 ausgebildet wird.

In einem weiteren alternativen Herstellungsverfahren kann die Membran 119 zwischen zwei Hälften des Formteils 112, 212, insbesondere stoffschlüssig, entsprechend angebracht werden.

In einem nachfolgenden Schritt können die Durchgangsöffnungen 116, 216 mit einem Füllschaum 230 ausgespritzt werden.

Um ein Brandschutzelement 100, 200 mit einem Rahmen 210 zu bilden, kann der Rahmen 210 in einer offenen Form, beispielsweise als Platte oder mit U-Profil, vorgesehen sein. Das Formteil 112, 212 wird auf der Rahmeninnenseite platziert und die Enden 226, 228 um das Formteil 112, 212 gefaltet, wodurch der geschlossene Rahmen 210 gebildet wird.

Schlitze 224 im Rahmen 210 können durch ein geeignetes Brandschutzmittel, beispielsweise eine intumeszierende Einlage, verschlossen und/oder mit einem intumeszierenden Schaummaterial ausgespritzt werden.

Alternativ kann das Formteil 112, 212 auch in einen bereits gebildeten Rahmen 210 eingesetzt werden.

Vorzugsweise weist das Formteil 112, 212 ein kleines Übermaß auf, sodass das Formteil 112, 212 im Rahmen 210 mittels einer Presspassung gehalten wird und Lücken sicher abgedichtet werden.

Zusätzlich oder alternativ kann das Formteil 112, 212 stoffschlüssig, beispielsweise durch Kleben, im Rahmen 210 befestigt sein, um zu verhindern, dass das Formteil 112, 212 aus dem Rahmen 210 herausgedrückt werden kann.

In einem alternativen Herstellungsverfahren wird zuerst der Rahmen 210 des Brandschutzelements 200 gebildet und anschließend das Formteil 112, 212 direkt im Rahmen 210 ausgebildet. Hierbei kann der Rahmen 210 als Teil der Form dienen, die zur Herstellung des Formteils 112, 212 verwendet wird.

Das Brandschutzelement 100, 200 kann fertig ausgebildet in eine zu verschließende Öffnung eingebaut werden.

Alternativ kann das Brandschutzelement 100, 200 erst in der zu verschließenden Öffnung fertiggestellt werden, insbesondere indem der Füllschaum 230 erst in die Durchgangsöffnungen 116, 216 eingebracht wird, wenn das Formteil 212 bereits in der Öffnung angeordnet ist. Hierbei können die Durchgangsöffnungen 116, 216 genutzt werden, um Leitungen beabstandet voneinander durch das Brandschutzelement 100, 200 zu führen, bevor der Füllschaum 230 eingebracht ist.

In Figur 4 ist ein Ausschnitt einer Wand 334 mit einer Öffnung 336 gezeigt, in der ein Brandschutzelement 300 als Brandschott eingebaut ist.

Das Brandschutzelement 300 ist so angeordnet, dass die Stirnseite 322 im Wesentlichen parallel zu Wand 334 ausgerichtet sind und die Seiten, die von dem Rahmen 310 bedeckt sind, in Richtung der Wand 334 zeigen. Auf diese Weise erstrecken sich die Durchgangsöffnungen 316 in Z-Richtung durch die Öffnung 336, und Leitungen können durch das Brandschutzelement 300 hindurchgeführt werden, ohne dabei die Wabenstruktur 314 und/oder den Rahmen 310 zu beschädigen. Hierbei muss lediglich die Membran (siehe Figur 1 b) durchstoßen werden, die die Durchgangsöffnungen 316 abdichtet.

Um Leitungen durch das Brandschutzelement 300 zu führen, kann beispielsweise mittels einer Lanze eine Durchführung im Füllschaum 330 geschaffen werden, durch die die Leitung geschoben werden kann.

In einer alternativen Ausführungsform sind die Durchgangsöffnungen 316 des Brandschutzelements 300 nicht mit einem Füllschaum 330 gefüllt und daher leer. In diesem Fall stellt die Membran (siehe Figur 1b) die Rauchgasdichtigkeit des Brandschutzelements 300 sicher.

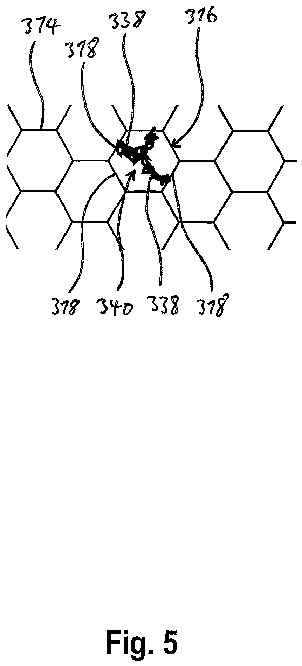

In Figur 5 ist anhand einer Durchgangsöffnung 316 beispielhaft dargestellt, wie sich das erfindungsgemäße Brandschutzelement im Brandfall verhält. Bei Überschreiten einer Grenztemperatur werden die Blähgraphitpartikel in den Wabenstruktur 314 aktiviert und expandieren als Äste 338 in die Durchgangsöffnungen 316. Dort verzweigen sich die Äste 338 verschiedener Wabenwände 318 und bilden Cluster 340, die zu einer Vernetzung der Wabenstruktur 314 führt. Auf diese Weise erhöht sich die Stabilität der sich bildenden Intumeszenz-Kruste, wodurch diese einen länger andauernden Schutz bietet.

Je nachdem ob, wie oder mit welcher Art von Füllschaum die Durchgangsöffnungen 316 gefüllt sind, wird das Ausbreitungsverhalten der Äste 338 und die Bildung von Clustern 340 beeinflusst. Durch geeignete Wahl der Füllungen der Durchgangsöffnungen 316 sowie deren Anordnung können hierdurch spezielle Vernetzungsmuster bereitgestellt werden, die dem Brandschutzelement 300 im Brandfall besonders günstige Brandschutzeigenschaften verleihen.

Mit dem erfindungsgemäßen Brandschutzelement lässt sich auf diese Weise schnell und einfach eine durch Wände oder Decken hindurchführende Öffnung sicher und andauernd abschotten. Durch die Membran ist das erfindungsgemäße Brandschutzelement auch ohne Kabelbelegung und ohne weitere Maßnahmen rauchgasdicht. Ferner wird mit dem erfindungsgemäßen Brandschutzelement ein Brandschutzelement bereitgestellt, das neben dem Brandschutz und der Rauchgasdichtigkeit die Möglichkeit bietet, auf einfache Weise verschiedene Arten von Leitungen separiert und sortiert zu verlegen.

Die Erfindung ist nicht auf die gezeigten Ausführungsformen beschränkt. Insbesondere können einzelne Merkmale einer Ausführungsform unabhängig von den anderen Merkmalen der entsprechenden Ausführungsform in einer weiteren erfindungsgemäßen Ausführungsform enthalten sein, d.h. die beschriebenen Merkmale sind beliebig kombinierbar.

## Patentansprüche

1. Brandschutzelement (100, 200, 300) zum Abschotten von durch Wände (334) oder Decken hindurchführende Öffnungen (336), insbesondere von Leitungsdurchgängen, mit einem Formteil (112, 212, 312) aus intumeszierendem Material, **dadurch gekennzeichnet, dass** das Formteil (112, 212, 312) mehrere Durchgangsöffnungen (116, 216, 316) zum Durchführen von Leitungen (121) aufweist, die sich insbesondere parallel zueinander von einer ersten Seite (122, 222, 322) zu einer entgegengesetzten zweiten Seite (123, 223) des Brandschutzelements (100, 200, 300) erstrecken und jeweils durch eine Membran (119) rauchgasdicht verschlossen sind.

2. Brandschutzelement nach Anspruch 1, **dadurch gekennzeichnet, dass** das Formteil (112, 212, 312) eine Wabenstruktur (114, 214, 314) aufweist.

3. Brandschutzelement nach einem der vorhergehenden Ansprüche, **dadurch gekennzeichnet, dass** die Membran (119) in der Mitte zwischen der ersten und der zweiten Seite (122, 222, 322, 123, 223) angeordnet ist.

4. Brandschutzelement nach einem der vorhergehenden Ansprüche, **dadurch gekennzeichnet, dass** zumindest ein Teil der Durchgangsöffnungen (116, 216, 316) mit einem Füllschaum (230, 330) gefüllt ist.

5. Brandschutzelement nach einem der vorhergehenden Ansprüche, **dadurch gekennzeichnet, dass** das Brandschutzelement (100, 200, 300) einen Rahmen (210, 310) aufweist, der das Formteil (112, 212, 312) in einer Umfangsrichtung (U) zumindest abschnittsweise umgibt, insbesondere wobei die Umfangsrichtung (U) sich um eine Achse (Z) erstreckt, die parallel zur axialen Ausdehnung der Durchgangsöffnungen (116, 216, 316) angeordnet ist.

6. Brandschutzelement nach Anspruch 5, **dadurch gekennzeichnet, dass** der Rahmen (210, 310) ein Material aus der folgenden Gruppe umfasst: Pappe, Metall, Glasfasern, Basaltfasern, Kohlenstofffasern, oder Keramikfasern.

7. Brandschutzelement nach Anspruch 5 oder 6, **dadurch gekennzeichnet, dass** der Rahmen (210, 310) ein intumeszierendes Material umfasst.

8. Brandschutzelement nach einem der vorhergehenden Ansprüche, **dadurch gekennzeichnet, dass** das Brandschutzelement (100, 200, 300) eine Deckplatte (232) aufweist.

9. Brandschutzelement nach Anspruch 8, **dadurch gekennzeichnet, dass** die Deckplatte (232) ein Material aus der folgenden Gruppe umfasst: Pappe, Metall, Glasfasern, Basaltfasern, Kohlenstofffasern oder Keramikfasern.

10. Brandschutzelement nach Anspruch 8 oder 9, **dadurch gekennzeichnet, dass** die Deckplatte (232) ein intumeszierendes Material umfasst.

11. Brandschutzelement nach einem der vorhergehenden Ansprüche, **dadurch gekennzeichnet, dass** das Formteil (112, 212, 312) Blähgraphit aufweist.

12. Brandschutzelement nach einem der vorhergehenden Ansprüche, **dadurch gekennzeichnet, dass** das Formteil (112, 212, 312) quaderförmig oder zylinderförmig ist, insbesondere kreiszylinderförmig.
